# FASCICULE DE BREVET EUROPEEN

(11) **EP 0 377 203 B1**
(45) Date de publication et mention de la délivrance du brevet: **09.02.1994**
(21) Numéro de dépôt: 89123955.0
(22) Date de dépôt: 27.12.1989
(51) Int. Cl.: H04J 3/16, H04L 12/00

(54) **Système de réception et de traitement de trames HDLC transmises sur liaison MIC multivoies à multiplexage temporel, notamment pour commutateur de données**
Empfangs- und Bearbeitungssystem für PCM-TDM-mehrwegübertragene HDLC-Rahmen, insbesondere für Datenvermittler
Reception and processing system for HDLC frames transmitted on PCM-TDM multipaths, especially for a data switcher

(30) Priorité: 30.12.1988 FR 8817505
(43) Date de publication de la demande: 11.07.1990
(73) Titulaire: ALCATEL CIT, 75008 Paris (FR)
(72) Inventeur: Bernardini, Fabrice, F-92140 Clamart (FR)
(74) Mandataire: Weinmiller, Jürgen

(56) Documents cités:
- EP-A- 0 147 086
- FR-A- 2 608 337

## Description

Le domaine de l'invention est celui de la transmission de données, dans le secteur des télécommunications, selon le protocole de normalisation ISO, et plus particulièrement selon les niveaux 1 et 2 de la norme.

L'invention concerne plus particulièrement un système de réception et de traitement de trames HDLC transmises sur liaison MIC multivoies, notamment pour commutateur de données

Le mode de réalisation particulier qui est à l'origine du développement de l'invention concerne un émetteur/récepteur HDLC (sigle anglais pour High level Data Link Control : Contrôle haut-niveau de liaison de données) à 32 voies multiplexées sur une liaison MIC, s'intégrant dans un coupleur MIC associé, par exemple à un commutateur de données.

Toutefois, bien entendu, la portée de l'invention s'étend à d'autres modes de réalisation, dans lesquels on peut trouver un formatage de trame de niveau 2 ISO (substitutif de l'HDLC) combiné à un mode de multiplexage de plusieurs voies formatées sur la liaison de transmission (mode substitutif du MIC).

Le codage HDLC consiste à sérialiser les données et à les formater en trames identifiables successives, comportant chacune, notamment, un "drapeau", signal de séparation de trames, et une information de contrôle, sur deux octets, de la validité de la trame (signature établie en fonction des bits de la trame), recalculée à la réception.

Le mode de transmission MIC à multiplexage temporel procure N voies (dites voies MIC) logiques indépendantes transmises par une même ligne physique de transmission, sous la forme de trames MIC identifiées chacune par un octet de début/fin de trame MIC. Dans chaque trame MIC, chaque voie se voit réserver un même octet de rang prédéterminé.

L'insertion des trames HDLC dans le format MIC à l'émetteur, puis la récupération des trames au récepteur suppose de disposer à chaque bout de la chaîne de transmission d'un système spécifique. L'invention concerne la partie réception d'un tel système.

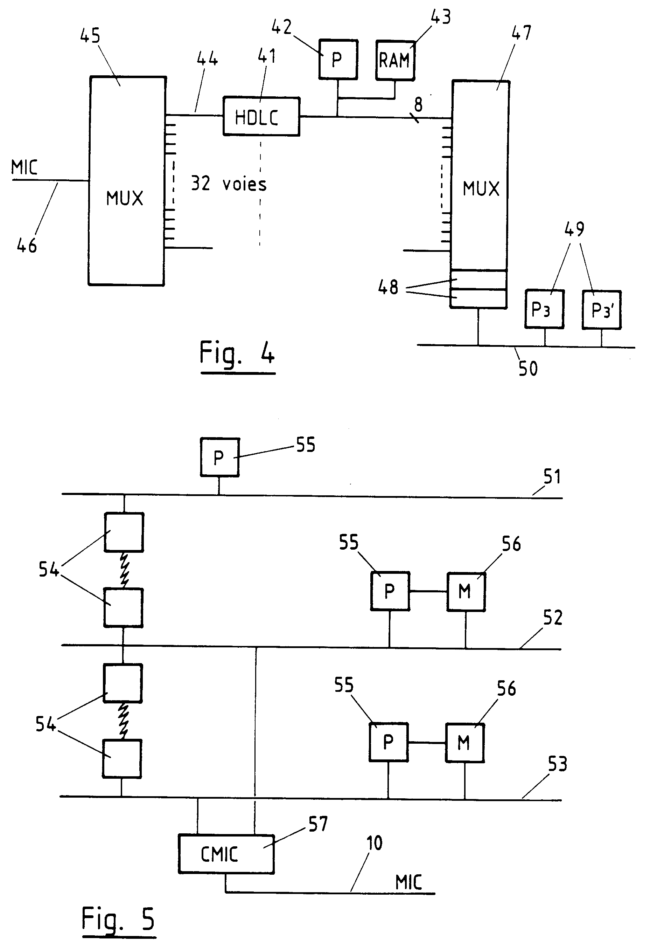

On connaît déjà des systèmes de réception de trames HDLC transmises sur des voies de type MIC, comprenant soit une machine spécialisée à partir de processeurs en tranche, soit une pluralité de processeurs affectés chacun à une voie de la liaison MIC. Ainsi, dans le système connu représenté en figure 4, on effectue la récupération des trames HDLC, voie par voie, après démultiplexage 45. Ceci est réalisé au moyen d'une ligne spécifique pour chacune des voies, comprenant d'une part un circuit HDLC propre 41, et d'autre part un processeur propre 42 associé à une mémoire tampon 43. Chacune des lignes 44 correspondant à une voie distincte alimente une mémoire commune de remultiplexage 47 qui concentre les trames décodées 48, avant qu'elles soient émises sur un bus 50 de traitement avec processeurs 49 de niveau 3 ISO. Le processeur 42 effectue l'analyse des octets et/ou des signaux d'états fournis par le circuit 41. Connaissant le système de transmission appliqué (procédure CCITT n^{o}7, X25 ou autre), et tenant à jour une information de progression, le processeur 42 est ainsi chargé du traitement des messages reçus, c'est-à-dire de déterminer pour chaque octet reçu, l'opération que doit entraîner la réception de l'octet, et il accomplit cette opération, en communiquant avec d'autres processeurs intéressés, autant que de besoin.

Ce système existant est parfaitement opérationnel, mais présente l'inconvénient de la multiplication des composants (autant de composants que de voies), et de la complexité de gestion qui en résulte.

Ces inconvénients sont particulièrement pénalisants pour le développement de systèmes de commutation destinés à gérer un très grand nombre de lignes transportant des débits importants de données numériques. Jusqu'à récemment, en effet, les liaisons MIC à 32 voies n'acheminaient que quelques voies logiques (2 par exemple), les autres voies étant analogiques. Il était donc envisageable, voire nécessaire, de traiter séparément chaque voie, la multiplication des composants 41, 42, 43 sur quelques voies parallèles seulement étant compensée par la souplesse de configuration ainsi permise.

Actuellement, on est amené à développer des systèmes d'émission/réception de type MIC comprenant exclusivement des voies numériques. On peut citer à titre d'exemple les PTS (Points de Transfert Semaphore) destinés à être installés sur le réseau commuté français, qui doivent par exemple avoir une capacité de traitement de l'ordre de 500 voies HDLC avec 64 kbits/s de débit.

La numérisation croissante du réseau, ainsi que l'augmentation des débits permettant la mise en place de services de plus en plus performants (RNIS) appellent clairement des systèmes MIC/HDLC plus performants.

Il est connu, dans cette direction, de réaliser les fonctions du circuit 41, pour plusieurs voies multiplexées dans le temps, à l'aide d'un circuit unique multiplexé, possédant une mémoire d'états de voies, et, à la réception d'un octet de chaque voie, dans une trame, lisant dans cette mémoire l'état de la voie, mémorisé dans la trame précédente, afin de reprendre le traitement de la voie, tel qu'il avait été laissé, après la réception d'un octet de cette voie dans la trame précédente.

Par rapport au diagramme de la figure 4, un tel circuit HDLC unique multiplexé se trouverait placé avant le démultiplexeur 45, au lieu qu'il y en ait un pour chaque voie, placé après le démultiplexeur. Il faudrait encore autant de processeurs 42, avec mémoire 43, qu'il y a de voies, pour faire face aux besoins concernant l'analyse et le traitement des trames reçues et des messages qu'elles contiennent.

L'invention a pour objectif de fournir un système de réception de trames HDLC transmises sur des voies MIC comprenant des moyens, communs à toutes les voies, d'analyse et de traitement des trames, de façon à éviter la multiplication de moyens matériels identiques pour chaque voie, tout en tenant compte du fait que chaque trame doit subir un traitement spécifique.

Un autre objectif de l'invention est de fournir un tel système de réception et de traitement de trames qui, associé à un processeur standard, permet de réduire le temps d'exécution de tâches répétitives d'analyse de trames.

Un autre objectif de l'invention est de fournir un tel système autorisant un traitement de durée variable pour les données reçues. L'invention a également pour objectif de fournir, pour un tel système, un dispositif câblé, de conception simple, de fonctionnement rapide, et compatible avec la cohabitation de procédures différentes simultanément sur les voies MIC (par exemple CCITT n7 et X 25).

Ces objectifs ainsi que d'autres qui apparaîtront par la suite sont atteints à l'aide d'un système de réception et de traitement de trames HDLC transmises sur liaison MIC multivoies à multiplexage temporel, notamment pour commutateur de données, caractérisé en ce qu'il comporte en outre d'une part, des moyens d'analyse et de traitement de mots comprenant notamment : une mémoire d'informations de voies contenant pour chaque voie au moins une indication de progression qui est fonction des mots de réception précédemment reçus sur cette voie ; des moyens pour adresser et lire cette mémoire d'informations à la fourniture de chaque mot de réception et obtenir alors l'information de voie correspondant à ce mot ; des moyens de transcodage pour combiner au moins ladite information d'état d'un mot de réception et au moins ladite information de progression pour produire alors au moins une information de traitement, définissant le traitement à appliquer à l'octet de données reçu, et une indication de modification de l'information de progression ; des moyens de modification de l'information de progression répondant à ladite indication de modification et modifiant celle-ci dans ladite mémoire d'informations de voies, et, d'autre part, un automate programmé de traitement recevant ledit octet de données et au moins ladite information de traitement, afin d'accomplir, au sujet de cet octet, le traitement indiqué.

Avantageusement, lesdits moyens de réception de trame HDLC et lesdits moyens d'analyse et de traitement de mots communiquent à travers une mémoire FIFO.

Avantageusement, lesdits moyens de transcodage coopèrent avec ledit automate comprenant :
. des premiers moyens de prise en compte de l'octet de données courant, accompagné de l'information de traitement fournie par lesdits seconds moyens de transcodage ;
. des moyens d'exécution dudit traitement sur ledit bloc de données,
lesdits premiers et seconds moyens étant cycliquement activés pour chaque nouvel octet de données.

De cette façon, ledit automate, dispensé de l'analyse préalable de l'information relative aux circonstances de la transmission, aussi bien que du suivi de la réception des trames, accomplit directement le traitement requis par la réception de chaque octet.

Avantageusement, lesdites informations d'état relatives aux données courantes comprennent au moins l'une des informations suivantes : début de trame, fin de trame avec validation du bloc, fin de trame avec absence de validation, octet courant valide, erreur de transmission ou de formatage.

Préférentiellement, les moyens d'analyse et de traitement de mots comprennent des moyens de comptage du nombre d'octets reçus, pour chaque trame HDLC reçue sur chaque voie, et ladite information de nombre d'octets est fournie auxdits moyens de transcodage pour identifier un traitement spécifique de chaque octet en fonction du rang de cet octet dans la trame complète à laquelle ledit octet appartient. En outre, lesdits moyens de transcodage présentent également avantageusement une entrée de réception d'une information d'état correspondant à l'occurrence d'un signal de synchronisation, ladite information étant fournie par lesdits moyens de décodage HDLC pour chaque octet de synchronisation de la trame MIC reçue.

Dans un mode de réalisation préférentiel de l'invention, lesdits moyens d'analyse et de traitement de mots comprennent, pour l'adressage de ladite mémoire d'informations de voies, des moyens de détermination du numéro de la voie du mot courant reçu, coopérant avec des moyens d'écriture desdites informations de voies dans la mémoire et des moyens de lecture desdites informations de voies à destination desdits moyens de transcodage. Lesdites informations de voies comprennent préférentiellement au moins l'une des informations suivantes : rang de l'octet courant dans la trame courante reçue sur chaque voie ; état de la voie de transmission.

Selon une autre caractéristique avantageuse de l'invention, ladite information de traitement fournie par les moyens de transcodage est constituée par une adresse de branchement de l'automate de traitement, fournissant ainsi directement l'adresse du programme de traitement à appliquer au sujet de l'octet reçu. L'automate de traitement comporte en outre préférentiellement des moyens de déclenchement du cycle suivant des moyens d'analyse et de traitement de mots, après exécution du cycle de traitement du mot courant.

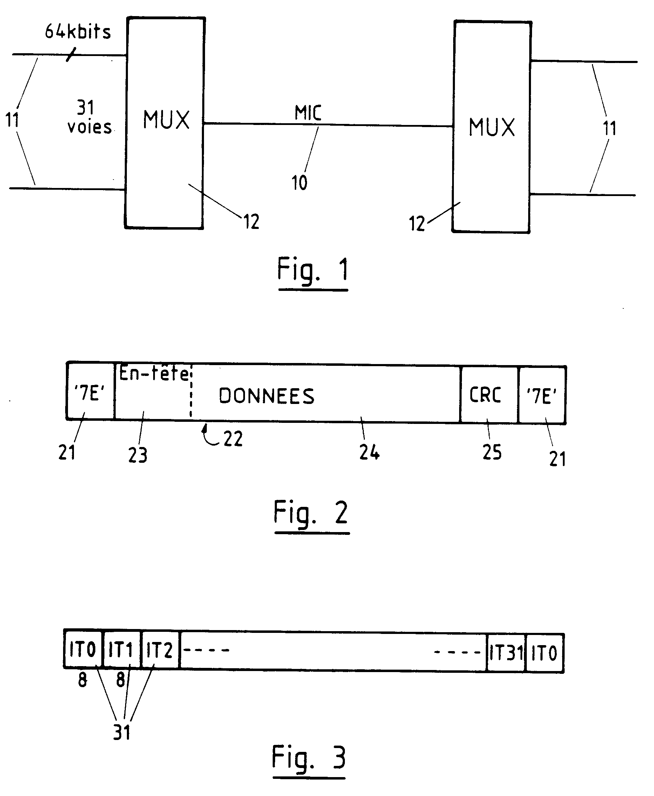

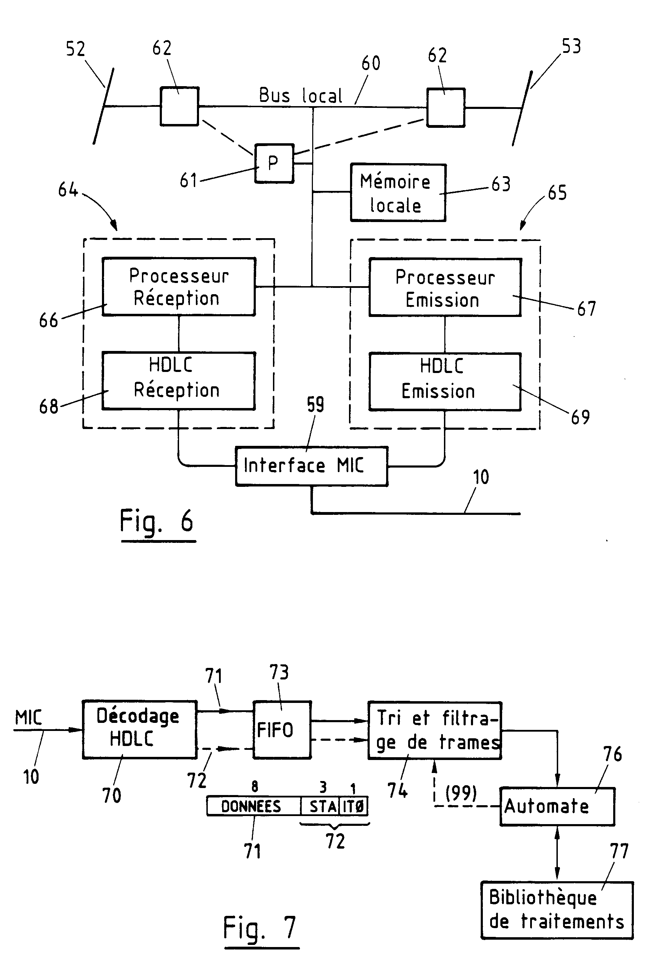

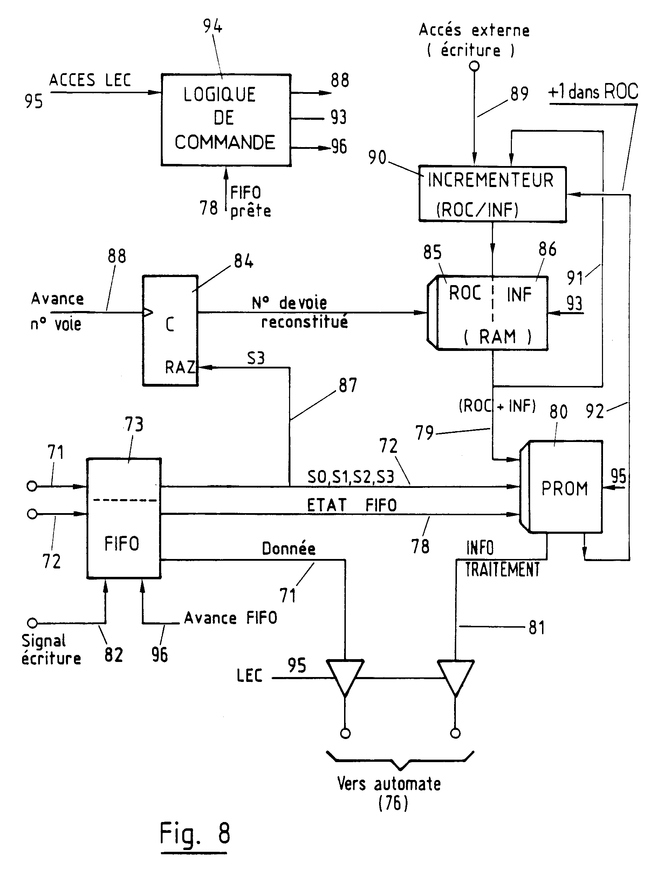

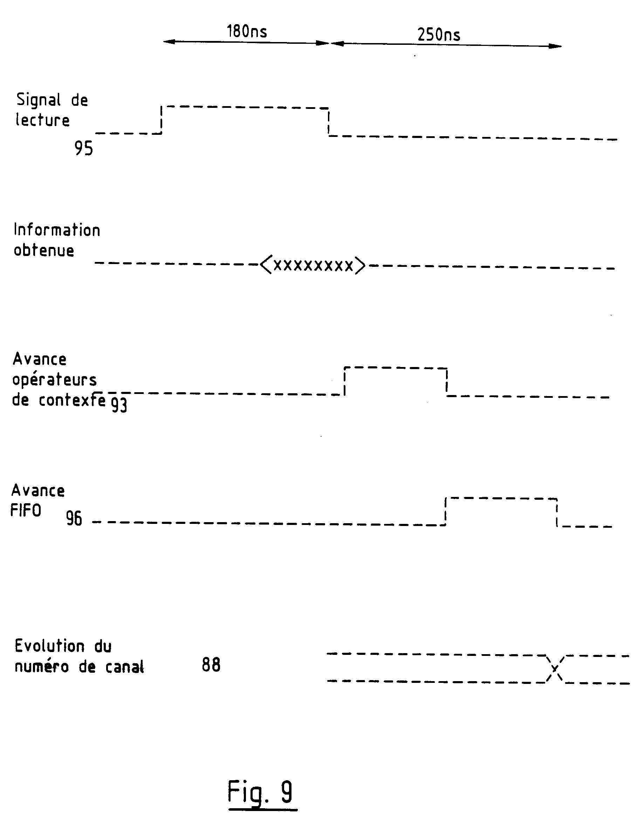

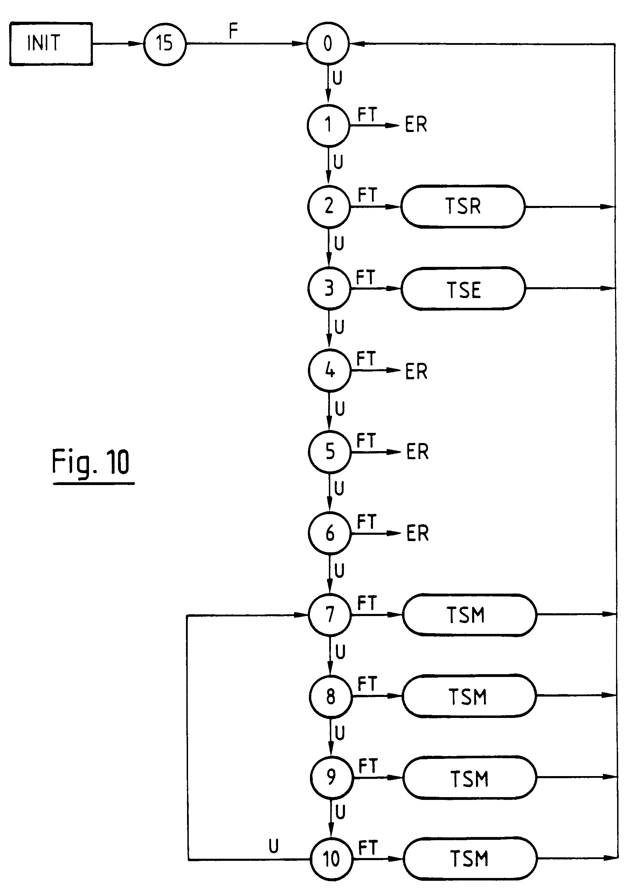

D'autres caractéristiques et avantages de l'invention ressortiront à la lecture de la description suivante d'un mode de réalisation préférentiel de l'invention donné à titre illustratif et non limitatif, et des dessins annexés dans lesquels :
. la figure 1 schématise la chaîne de transmission d'une liaison MIC à 31 voies, dans laquelle s'inscrit le système d'émission suivant l'invention ;
. la figure 2 schématise la structure d'une trame HDLC ;
. la figure 3 schématise la structure d'une trame MIC ;
. la figure 4 illustre un mode de réalisation connu d'un système de réception de trames HDLC transmises sur canal de type MIC, avec décodage HDLC séparé pour chaque voie ;
. la figure 5 schématise l'implantation d'un coupleur MIC sur un commutateur de données ;
. la figure 6 représente la structure d'un coupleur MIC, auquel est applicable le système d'émission de l'invention ;
. la figure 7 représente la structure d'un mode de réalisation avantageux des moyens d'analyse et de traitement de mots de l'invention ;
. la figure 8 schématise les modules principaux constitutifs des moyens d'analyse et de traitement de mots du système de réception et de traitement de trames HDLC suivant l'invention ;
. la figure 9 est un diagramme d'état schématisant la reconnaissance de trames selon le nombre d'octets utiles de la trame complète ;
. la figure 10 présente le séquencement d'un cycle de lecture de dispositif d'analyse et de traitement de mots, par l'automate de traitement selon l'invention.

Le mode de réalisation qui va être décrit ci-après concerne une liaison 10 de type MIC, construite à partir de 31 voies HDLC 11 multiplexées (12) avec une 32ème voie de synchronisation (norme MIC) comme schématisé en figure 1.

A titre d'exemple, on peut considérer que les voies HDLC présentent un débit de 64 kbits/s avec une liaison MIC de type MIC CEPT (2,048 Mbits/s), et une procédure de transmission de type CCITT n7.

La figure 2 représente la structure d'une trame HDLC. On peut identifier :
. un fanion "7E" 21 pour séparer les trames. Le code "7E" correspond à la séquence binaire O 1 1 1 1 1 1 0.
. N octets de données 22. Le nombre N d'octets est fonction du logiciel, et est variable (par exemple 1 000 octets maximum). Parmi ces octets de données, on peut distinguer d'une part l'entête de message 23, constituée par exemple par un numéro de trame, un numéro de la dernière trame émise par le système distant, et une indication de longueur du message dans la trame HDLC, et d'autre part le corps du message proprement dit 24 ;
. deux octets de validation de trame 25. Ces octets sont symbolisés par le terme CRC (Cyclic Redundancy Check : contrôle par redondance cyclique), et leur valeur est fonction des bits de la trame. Ces deux octets sont ainsi par exemple constitués par le reste de la division de la trame par un polynôme prédéterminé.

Les trames HDLC sont émises successivement sur chaque voie, avec un séparateur de trame 21 entre chaque trame successive. En cas d'absence de trame, on émet en continu des fanions séparateurs 21.

On peut distinguer 3 types de trames HDLC en fonction de leur longueur, en protocole CCITT n 7 :
. les trames TSR de remplissage, comprenant 3 octets
. les trames TSE d'état (caractérisant l'état de la liaison, par exemple à l'ouverture), comprenant 4 octets
. les trames TSM de transmission de message, comprenant 7 octets ou plus.

La construction de ces trames HDLC à partir de séquences de données source, impose d'utiliser à l'émetteur un module spécifique (USART : Universal Synchronous/Asynchronous Receiver/Transmitter : Emetteur/Récepteur universel synchrone/asynchrone), chargé notamment des fonctions suivantes :
. sérialiser les données, qui lui parviennent par exemple sous forme d'octets successifs ;
. supprimer les occurrences de symbole "7E" à l'intérieur de la trame de données, de façon à éviter toute ambiguïté avec les fanions de fin de trame 21. Cette fonction est établie au moyen de la règle dite "de transparence", qui consiste à insérer des zéros dans la séquence de données utile dès qu'on a détecté cinq bits successifs à la valeur 1 ;
. calcul des deux octets de validation CRC 25, pour les insérer en fin de trame ;
. insertion des fanions de séparation de trame 21 entre chaque trame HDLC.

Bien entendu, un composant symétrique est utilisé dans la partie réception, pour récupérer les données transmises, en réalisant les fonctions suivantes :
. détection et élimination des fanions de trame 21 ;
. vérification de l'adéquation entre la séquence de données utile transmise 22 et les deux octets de contrôle 25. En cas d'inadéquation, le récepteur se met en position "erreur", et commande par exemple une retransmission de la trame ;
. extraction des zéros insérés dans la trame, à l'émission, suivant la règle de transparence.
. désérialisation des données ;
La structure d'une trame MIC est représentée en figure 3.

Le débit d'une trame MIC multiplexée, construite à partir de 32 voies de 64 Kbits/s, est de 32 X 64 = 2,048 Mbits/s. Les données sont émises par blocs successifs de 256 bits, se répétant sans fin, du type du bloc représenté en figure 3. Ce bloc est constitué de 32 intervalles de temps 31, de 8 bits chacun : ITO, IT1, ..., IT31. L'octet IT0 contient un signal de synchronisation. Les octets IT1 à IT31 correspondent chacun à un canal (ou voie) de transmission différent. Du point de vue de l'émetteur ou du récepteur, chaque abonné voit donc ses données tronçonnées, et émises tous les 256 bits, en multiplexage avec les données des voies parallèles.

Le cas échéant, l'octet IT16 correspond à des données de signalisation, qui précisent l'utilisation de chacun des octets IT1, IT2, ...

Le mode de réalisation du système de l'invention va être décrit plus précisément en relation avec un commutateur de données tel que représenté en figure 5.

Un tel commutateur de données est par exemple constitué d'un système multiprocesseurs multibus, dans lequel on peut distinguer :
. un bus de gestion 51 ;
. au moins un bus de commutation des trames 52, 53, destiné à traiter les données reçues, et les regrouper, de façon à les réémettre vers des lignes d'émission 10 adéquates ;
. des bus de raccordement aux lignes d'émission/réception.

Les bus 51, 52, 53 du système sont connectés les uns aux autres à travers des paires de coupleurs de bus 54, qui permettent aux processeurs 55 connectés à chaque bus de communiquer entre eux ou avec des modules esclaves tels que des mémoires 56.

La connexion à une liaison MIC 10 s'effectue à travers un coupleur MIC 57 préférentiellement raccordé en parallèle à deux bus 52, 53. Des deux interfaces du coupleur MIC 57 avec les bus 52, 53, une seule est active à un moment donné, sous contrôle d'un processeur de gestion d'accès 61 (Figure 6). L'activation de la seconde interface peut par exemple intervenir en cas de défaillance de la première, la double connexion du coupleur MIC 57 étant ainsi réalisée pour des raisons de sécurité.

La figure 6 représente la structure d'un coupleur MIC, du type dans lequel l'invention peut notamment être mise en oeuvre.

Le coupleur MIC est connecté à deux bus 52, 53 du commutateur de données au moyen de deux circuits d'isolement 62, du type des circuits tampon à trois états, pilotés par le processeur de gestion 61.

Le processeur de gestion 61 comporte en outre d'autres fonctions :
. il coopère avec les processeurs connectés aux bus 52, 53, pour la gestion des trames source de données, et des taux d'erreur ;
. il participe à la gestion de la mémoire locale 63 du coupleur MIC ;
. il contrôle l'encombrement et le débit du bus local 60 du coupleur MIC, et gère l'acheminement des données sur ce bus local 60 ;
. il gère les temporisations activées lors des transferts de données sur le bus, dans l'attente des accusés de réception ;
. il envoie des ordres de travail au processeur d'émission 67 sur la liaison MIC 10.

Le coupleur MIC comporte en outre d'une part une mémoire locale 63, et d'autre part deux branches de traitement 64, 65 correspondant respectivement au module de réception et au module d'émission du coupleur. Ces modules 64, 65 coopèrent avec une interface MIC commune 59, connectée à la liaison MIC 10. Chacun des modules 64, 65 comporte d'une part un processeur 66, 67, et d'autre part un circuit HDLC 68, 69, comportant les fonctions "USART" à l'émission ou à la réception, comme décrit plus haut.

L'invention concerne plus particulièrement la structure et le fonctionnement du module 64, pour les opérations de réception des trames HDLC transmises sur la liaison MIC 10.

La figure 7 schématise l'ensemble des éléments principaux des systèmes de réception de l'invention.

On peut y distinguer :
. les moyens 70 de décodage des trames HDLC reçus de la liaison MIC multi-voies 10, qui fournissent en sortie d'une part les données utiles 71 extraites des trames HDLC, et d'autre part des informations d'état 72 caractérisant les données ;
. une mémoire FIFO 73 de stockage temporaire des données 71 et des informations d'état 72. La FIFO 73 joue le rôle de mémoire tampon entre les moyens de décodage 70, et les moyens d'analyse et de traitement de mots 74 ;
. les moyens 74 d'analyse et de traitement de mots, recevant en entrée les informations provenant de la FIFO 73 ;
. un automate de traitement 76 effectuant la lecture périodique de la sortie des moyens 74 d'analyse et de traitement de mots, de façon à commander sélectivement le traitement adéquat pour chaque octet reçu à l'aide d'une bibliothèque 77 de programmes de traitement. L'automate 76 est également chargé de déclencher (99) chaque nouveau cycle de fonctionnement des moyens 74 d'analyse et de traitement de mots.

Le fonctionnement des moyens 70 de décodage HDLC est le suivant.

Comme déjà noté, la liaison MIC supporte 32 intervalles de temps. On a donc au maximum 31 canaux utiles (IT1 à IT31), et une voie de synchronisation IT0. Les moyens 70 débarrassent les données reçues de la liaison MIC, de leur enveloppe HDLC, et fournissent les données utiles à raison d'une information par intervalle de temps (par exemple 3,88 µs).

Plus précisément, les moyens 70 émettent à chaque trame MIC reçue, un octet 71 pour chacune des 32 voies de la liaison MIC. Toutefois, il est clair que le décodage HDLC prive les octets des canaux MIC d'un certain nombre de bits (bits de transparence, CRC, fanions de séparation). En conséquence, les moyens 70 fonctionnent de la manière suivante :
. émission d'un octet non significatif, accompagné d'une information "octet non significatif ", lorsqu'il n'est pas possible d'envoyer un octet complet.
. stockage de l'octet incomplet dans des moyens de stockage temporaire (spécifiques à chaque voie), de la valeur d'un octet ;
. remplissage en complément de la mémoire de stockage temporaire de la voie, à partir de la trame MIC suivante, de façon à compléter l'octet de données utiles de la voie. L'octet utile est ensuite envoyé vers la FIFO 73, avec une information d'état précisant "octet valide".

Le flot de données 71, tel qu'envoyé à la FIFO 73 a donc le format suivant 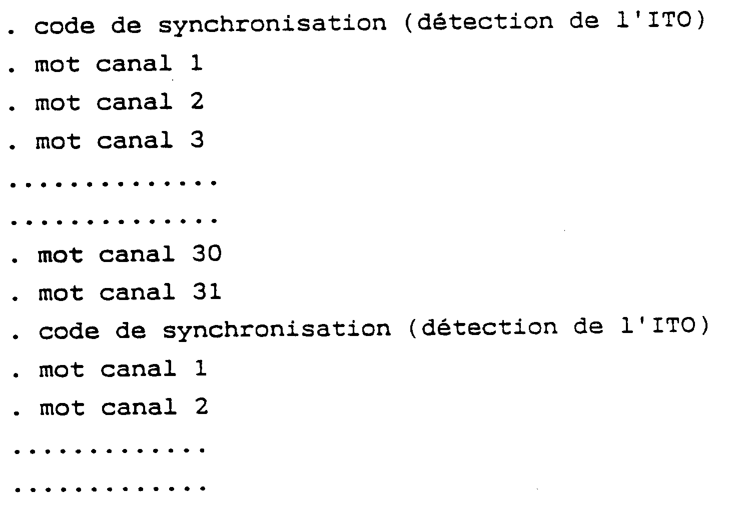
etc.

Un mot est constitué d'un octet de données 71 (fraction de trame) accompagné d'une information d'état 72 précisant la nature de l'octet. (début de trame, fin de trame, erreur, etc.). Cette information est codée sur 4 bits s0, s1, s2, s3, soit 3 bits d'octet (STA) et un bit de synchronisation (s3 = ITO) :

| s3 | s2 | S1 | s0 | |
|---|---|---|---|---|
| 0 | 0 | 0 | 0 | octet de donnée non significatif |
| 0 | 0 | 0 | 1 | fanion détecté (utile à l'amorçage) |
| 0 | 0 | 1 | 0 | octet de donnée valide |
| 0 | 0 | 1 | 1 | (non utilisé) |
| 0 | 1 | 0 | 0 | fin de trame (CRC valide) |
| 0 | 1 | 0 | 1 | fin de trame avec erreur CRC |
| 0 | 1 | 1 | 0 | détection d'une cause de suspension d'exécution (Abort)(7 "un" consécutifs) |
| 0 | 1 | 1 | 1 | erreur de format |
| 1 | x | x | x | "IT0" détectée |

Les données stockées dans la FIFO 73 sont ensuite lues par les moyens 74 d'analyse et de traitement de mots.

Un mode de réalisation avantageux de la structure de ces moyens 74 d'analyse et de traitement de mots est représenté en figure 8.

L'élément central du dispositif d'analyse et de traitement de mots est la mémoire morte 8O de transcodage. Cette mémoire morte reçoit en entrée d'une part les informations d'état 72 provenant du circuit de décodage HDLC 70, ainsi qu'une information 78 de l'état de la FIFO 73, et d'autre part une double information 79 relative à l'état du canal MIC (INF), et au rang de l'octet courant dans la trame courante (ROC). En sortie, la mémoire de transcodage 80 fournit une information 81 de traitement adéquat pour la donnée courante 71.

Cette information de traitement 81 est lue en même temps que la donnée 71 par l'automate 76 qui identifie ainsi le traitement adéquat pour la donnée sortante.

La mémoire de transcodage 80 fonctionne en coopération avec les modules suivants :
. la FIFO 73 d'entrée des données à traiter délivrées par le circuit HDLC amont 70, avec son signal d'écriture ;
. un compteur 84 à 5 bits reconstituant le numéro de voie sur lequel on travaille et permettant de pointer les mémoires d'informations de voies 85,86 (8 bits par canal).

Ce compteur 84 subit une remise à zéro 87 en présence du code ITO. Il ne subit pas d'avance 88 si le canal FIFO est vide, et est incrémenté dans le cas contraire. L'avance a lieu en fin de cycle, ce qui permet d'employer des composants ordinaires.
. les mémoires 85 et 86 d'informations de voies reçoivent les données d'un opérateur 90, et incluent deux informations :
. champ INF 86 : précise l'état de la voie (en service, hors service, mode comptage d'octet en N7...), ainsi que le type de procédure de cette voie. Cette information provient de la liaison externe 89. L'information de voie 86 est à positionner à l'initialisation, mais peut être modifiée à tout moment.
. champ ROC 85 (rang de l'octet reçu) : il s'agit d'un compteur sur 4 bits évoluant (ou pas) à chaque octet reçu. L'incrémentation du compteur est effectuée par l'opérateur 90 et permet le traitement spécifique des octets d'en-tête des trames, et l'identification de la nature des trames d'après leur longueur (trames de remplissage TSR et d'état TSE en N7, trames de message utile...).

Le champ ROC est remis à zéro sur événement "fin de trame ou sur faute détectée", mais garde sa valeur sur "octet incomplet".

La prise en compte du rang de l'octet courant permet de traiter sélectivement chacune des trames reçues en fonction de sa longueur. Comme représenté en figure 10, on peut en effet identifier les trames de remplissage TSR (2 octets), les trames d'état TSE (3 octets), et les trames de message (au moins 7 octets).

Le fonctionnement du diagramme d'état est le suivant :
- un incrémenteur 90 du dispositif d'analyse et de traitement de mots incrémente le champ ROC d'une unité à chaque prise en compte d'un octet valide reçu de la FIFO 73, pour une voie donnée. Dés réception de l'octet de fin de trame (FT), la longueur de la trame est identifiée, et donc la nature de la trame (TSR, TSE, TSM).

Au cas où la longueur de la trame ne correspond pas à un cas possible, le système part en traitement d'erreur ER.

Le rebouclage sur les 4 valeurs finales constitue une aide précieuse pour le processeur dans le traitement des trames de message (test de dépassement de longueur un octet sur 4, fonction multi-dma, etc.)

Un cycle de fonctionnement des moyens 74 de la figure 8 commence par la réception d'un signal de déclenchement LEC 95 provenant de l'automate 76, lorsqu'il est prêt à recevoir et à traiter un octet reçu dans une des voies de la liaison MIC 10.

Ce signal ouvre les commutateurs transférant le signal de données 71 et l'information de traitement 81 en direction de l'automate 76, mais l'information en question n'est pas encore prête.

Le signal 95 déclenche en outre le fonctionnement d'une logique de commande qui produit des signaux de commandes nécessaires à l'accomplissement d'un cycle de fonctionnement complet du dispositif 74. Toutefois, l'absence du signal FIFO prête 78 inhibe un tel cycle.

Le signal 95 provoque en outre un cycle de lecture dans la mémoire 80 constituant le dispositif de transcodage. L'adresse est composée, comme indiqué, des signaux 79, 72, 78, caractérisant l'état ou le type de procédure en application sur la voie considérée (INF), le nombre d'octet reçus depuis le début d'une trame en cours (ROC), s'il y a lieu, une information d'état qui est fonction des circonstances de l'acheminement de l'octet reçu ou de sa place dans la trame (90 à 93), selon le tableau fourni antérieurement, et de l'état, vide ou occupée, de la FIFO comme indiqué plus haut. En réponse, directement, le dispositif de transcodage fournit l'information inscrite à cette adresse qui comprend une information de traitement identifiant, comme indiqué précédemment, un programme qu'il convient d'exécuter au sujet de l'octet de données 71. Comme l'indique la figure 9, cette information est disponible dans le dernier tiers d'un intervalle de temps de 180 ns à l'expiration duquel l'automate 76 vient en effectuer la lecture. L'automate 76 reçoit ainsi dans un délai très court un octet 71 et une information de traitement qui lui permet d'accéder sans opérations préalables au programme de traitement de cet octet. Le gain de temps est important dans la mesure où, devant traiter les octets arrivant au rythme d'un octet toutes les 3,88 us et provenant de voies différant par la procédure, l'état de voie, le type de trame en cours et le stade d'avancement dans la réception d'une trame, l'automate 76, à fonctionnement programmé, aurait sans cela dû commencer par effectuer une série importante d'opérations successives de test avant de parvenir à identifier quel programme de traitement devait être appliqué. On peut même dire que, à moins d'utiliser un processeur ultrarapide, très coûteux, l'automate 76 aurait été incapable de traiter les 31 voies d'un MIC CEPT.

Le signal 92, appliqué à l'incrémenteur 90 fait que l'information ROC+INF, lue antérieurement et disponible à la sortie de la mémoire 85, 86, est retournée à le crée de cette mémoire, soit à l'identique, soit, avec incrémentation du champ ROC, dans les conditions précisées plus haut. Lorsqu'ensuite la logique 94 produit le signal 93, appliqué à la mémoire 85, 86, l'information éventuellement incrémentée par l'incrémenteur 90 est réinscrite à une adresse qui est alors toujours celle de la voie considérée.

Le signal 96 est ensuite engendré par la logique 94 et il est appliqué sur l'entrée avance FIFO, commandant une opération de lecture qui concerne la voie suivante.

La fin du signal 96 produit le signal transitoire 88 qui provoque l'avance du compteur de voies 84. L'absence du signal 93 provoque une opération de lecture de la mémoire 85, 86, fournissant l'information ROC+INF de la voie suivante, pour que cette information soit disponible dès que l'automate demandera l'octet suivant, ce qui renvoie au début du cycle de fonctionnement que l'on vient de décrire.

## Revendications

1. Système d'analyse et de traitement de trames HDLC transmises sur liaison MIC multivoies à multiplexage temporel, notamment pour commutateur de données, comprenant des moyens multiplexés de réception de trames HDLC communs à toutes les voies et fournissant, pour chaque voie MIC, dans une trame, un mot de réception comportant un octet de données et une information d'état relative à cet octet caractérisé en ce qu'il comprend en outre, d'une part, des moyens (74) d'analyse et de traitement de mots comprenant notamment : une mémoire d'informations de voies (85, 86) contenant pour chaque voie au moins une indication de progression (ROC) qui est fonction des mots de réception précédemment reçus sur cette voie ; des moyens (84) pour adresser et lire cette mémoire d'informations à la fourniture de chaque mot de réception et obtenir alors l'information de voie correspondant à ce mot (ROC+INF) ; des moyens (80) de transcodage pour combiner au moins ladite information d'état (S0 ..., S3) d'un mot de réception et au moins ladite information de progression (ROC+INF) pour produire alors au moins une information de traitement (81), définissant le traitement à appliquer à l'octet de données reçu, et une indication de modification de l'information de progression (92) ; des moyens (90) de modification de l'information de progression répondant à ladite information de modification et modifiant celle-ci dans ladite mémoire d'informations de voie, et, d'autre part, un automate de traitement programmé (76) recevant ledit octet de données et au moins ladite information de traitement, afin d'accomplir, au sujet de cet octet, le traitement indiqué par l'information de traitement.

2. Système selon la revendication 1 caractérisé en ce qu'il comprend une mémoire FIFO (73) entre lesdits moyens de réception de trames (70) et lesdits moyens d'analyse et de traitement de mots (74).

3. Système selon la revendication 1 caractérisé en ce que ladite information d'état (72) relative à l'octet de données courant (71) comprend au moins l'une des informations suivantes : début de trame, fin de trame avec validation du bloc, fin de trame avec absence de validation, octet courant valide, erreur de transmission ou de formatage.

4. Système selon la revendication 1 caractérisé en ce que lesdits moyens (74) d'analyse et de traitement de mots comprennent des moyens (85,90) de comptage du nombre d'octets reçus, pour chaque trame HDLC reçue sur chaque voie, et en ce que l'information de nombre d'octets est fournie auxdits moyens de transcodage (80) pour identifier un traitement spécifique de chaque octet en fonction du rang de cet octet dans la trame.

5. Système selon la revendication 1 caractérisé en ce que lesdits moyens de transcodage (80) présentent une entrée de réception d'une information d'état (72) correspondant à l'occurrence d'un signal de synchronisation, ladite information (72) étant fournie par lesdits moyens de décodage HDLC (70) pour chaque signal de synchronisation de la trame MIC reçue.

6. Système selon la revendication 1 caractérisé en ce que ledits moyens (74) d'analyse et de traitement de mots comprennent une mémoire (85,86), d'informations de voies (71), adressée par des moyens (84) de détermination du numéro de la voie du mot courant reçu, et coopérant avec des moyens (90) d'écriture desdites informations de voies dans la mémoire (85, 86) et des moyens de lecture desdites informations de voies (79) à destination desdits moyens de transcodage (80).

7. Système selon la revendication 6 caractérisé en ce que lesdites informations de voies comprennent au moins l'une des informations suivantes : rang de l'octet courant dans la trame courante reçue sur chaque voie ; état de la voie de transmission.

8. Système selon la revendication 1 caractérisé en ce qu'il coopère avec un automate analyseur (76) comprenant :
. des premiers moyens de prise en compte de l'octet de données courant (71), accompagné de l'information de traitement (81) fournie par lesdits moyens de transcodage ;
. des seconds moyens d'exécution dudit traitement sur ledit octet de données ,
lesdits premiers et seconds moyens étant cycliquement activés pour chaque nouvel octet de données (71).

9. Système selon la revendication 1 caractérisé en ce que ledit automate comporte des moyens de déclenchement de chaque nouveau cycle dudit dispositif d'analyse et de traitement de mots (74), déclenchés après exécution de chacun des cycles de traitement de mot.

10. Système suivant la revendication 1 caractérisé en ce que lesdits moyens de transcodage (80) sont constitués par une mémoire morte.

11. Système suivant l'une quelconque des revendications 1 à 9 caractérisé en ce que ladite information de traitement (81) fournie en sortie des moyens de transcodage (82) est une adresse logique de branchement sur un programme de traitement.

## Claims

1. System for analysing and processing HDLC frames transmitted on a multichannel time division multiplex PCM link, among other things for a data switch, comprising multiplexed means for receiving HDLC frames common to all the channels and supplying for each PCM channel in a frame a receive word comprising a data byte and status information relating to this byte, characterised in that it further comprises word analysing and processing means (74) comprising a channel data memory (85, 86) containing for each channel at least one progress indication (ROC) which is a function of the receive words previously received on said channel; means (84) for addressing and reading said data memory when each receive word is supplied and thus obtaining the channel data corresponding to said word (ROC+INF); transcoding means (80) for combining at least said status information (S0 ..., S3) for a receive word and at least said progress indication (ROC+INF) thereby producing processing information (81) defining the processing to be applied to the received data byte and a progress indication modification indication (92); means (90) for modifying said progress indication responsive to said modification indication and modifying the latter in said channel data memory and a programmed automatic processor (76) receiving said data byte and at least said processing information in order to perform with respect to said byte the treatment indicated by the processing information.

2. System according to claim 1 characterised in that it comprises a FIFO memory (73) between said frame receiving means (70) and said word analysing and processing means (74).

3. System according to claim 1 characterised in that said status information (72) relating to the current data byte (71) comprises at least one of the following: frame start, frame end with block validation, frame end with no block validation, current valid byte, transmission or formatting error.

4. System according to claim 1 characterised in that said word analysing and processing means (74) comprise means (85; 90) for counting the number of bytes received for each HDLC frame received on each channel and in that the number of bytes is supplied to said transcoding means (80) in order to identify specific processing of each byte according to the location of the byte in the frame.

5. System according to claim 1 characterised in that said transcoding means (80) have an input for status information (72) corresponding to the occurrence of a synchronisation signal, said information (72) being supplied by said HDLC decoding means (70) for each synchronisation signal of the received PCM frame.

6. System according to claim 1 characterised in that said word analysing and processing means (74) comprise a memory (85, 86) for channel data (71) addressed by means (84) for determining the channel number of the current receive word and cooperating with means (90) for writing said channel data in the memory (85, 86) and means for reading said channel data (79) for further processing by said transcoding means (80).

7. System according to claim 6 characterised in that said channel data comprises at least the location of the current byte in the current frame received in each channel or the status of the transmission channel.

8. System according to claim 1 characterised in that it cooperates with an automatic analysis processor (76) comprising:
. first means for processing the current data byte (71) together with the processing information (81) supplied by said transcoding means,
. second means for processing said data byte, said first and second means being cyclically activated for each new data byte (71).

9. System according to claim 1 characterised in that said automatic processor comprises means for triggering each new cycle of said word analysing and processing device (74) triggered after performing each of the word processing cycles.

10. System according to claim 1 characterised in that said transcoding means (80) comprise a read-only memory.

11. System according to any one of claims 1 to 9 characterised in that said processing information (81) supplied at the output of said transcoding means (82) is a logic address for branching to a processing program.

## Patentansprüche

1. System zur Analyse und Bearbeitung von HDLC-Rahmen, die über Mehrkanal-PCM-Verbindungen im Zeitmultiplex übertragen werden, insbesondere für Datendurchschalter, wobei das System multiplexierte Mittel zum Empfang von allen Kanälen gemeinsamen HDLC-Rahmen aufweist und für jeden PCM-Kanal in einem Rahmen ein Empfangswort liefert, das ein Datenoktett und eine sich auf dieses Oktett beziehende Zustandsinformation enthält, dadurch gekennzeichnet, daß das System weiter zum einen Mittel (74) zur Analyse und Bearbeitung von Wörtern aufweist, die insbesondere enthalten:
. einen Kanalinformationsspeicher (85, 86), der für jeden Kanal mindestens eine Schrittfolgeangabe (ROC) enthält, die von den über diesen Kanal zuvor empfangenen Empfangswörter abhängt;
. Mittel (84) zum Adressieren und Lesen dieses Informationsspeichers bei der Lieferung jedes Empfangswortes und somit zum Erhalten der diesem Wort (ROC+INF) entsprechenden Kanalinformation;
. Umkodiermittel (80) zum Kombinieren mindestens der Zustandsinformation (S0..., S3) eines Empfangswortes und mindestens der Schrittfolgeinformation (ROC+INF), um so mindestens eine Bearbeitungsinformation (81) zu erzeugen, die die auf das empfangene Datenoktett anzuwendende Bearbeitung definiert, und eine Angabe über die Änderung der Schrittfolgeinformation (92),
. Mittel (90) zum Modifizieren der Schrittfolgeinformation, die auf die Angabe über die Änderung antworten und diese im Kanalinformationsspeicher modifizieren,
und daß das System zum anderen einen programmierten Bearbeitungsautomaten (76) aufweist, der das Datenoktett und mindestens die Bearbeitungsinformation empfängt, um in Bezug auf dieses Oktett die von der Bearbeitungsinformation angegebene Bearbeitung durchzuführen.

2. System nach Anspruch 1, dadurch gekennzeichnet, daß es einen FIFO-Speicher (73) aufweist, der zwischen den Rahmenempfangsmitteln (70) und den Wortanalyse- und -bearbeitungsmitteln (74) angeordnet ist.

3. System nach Anspruch 1, dadurch gekennzeichnet, daß die Zustandsinformation (72) in Bezug auf das laufende Datenoktett (71) mindestens eine der folgenden Informationen aufweist: Anfang des Rahmens, Ende des Rahmens mit Validierung des Rahmens, Ende des Rahmens ohne Validierung, Gültigkeit des laufenden Oktetts, Übertragungs- oder Formatierungsfehler.

4. System nach Anspruch 1, dadurch gekennzeichnet, daß die Wortanalyse- und -bearbeitungsmittel (74) für jeden über jeden Kanal empfangenen HDLC-Rahmen Mittel (85, 90) zum Zählen der Anzahl der empfangenen Oktette aufweisen, und daß die Information über die Anzahl der Oktette an die Umkodiermittel (80) geliefert werden, um eine spezifische Bearbeitung jedes Oktetts in Abhängigkeit vom Rang des Oktetts im Rahmen zu kennzeichnen.

5. System nach Anspruch 1, dadurch gekennzeichnet, daß die Umkodiermittel (80) einen Eingang zum Empfang einer Zustandsinformation (72) entsprechend dem Auftreten eines Synchronisationssignals besitzen, wobei die Information (72) für jedes Synchronisationssignal des empfangenen PCM-Rahmens von den HDLC-Dekodiermittel (70) geliefert wird.

6. System nach Anspruch 1, dadurch gekennzeichnet, daß die Wortanalyse- und -bearbeitungsmittel (74) einen Informationsspeicher (85, 86) für Kanäle (71) aufweisen, der von den Mitteln (84) zur Ermittlung der Nummer des Kanals des empfangenen laufenden Worts adressiert wird und der mit Mitteln (90) zum Einschreiben der Kanalinformationen in den Speicher (85, 86) und mit Mitteln zum Auslesen der an die Umkodiermittel (80) gerichteten Kanalinformationen zusammenwirken.

7. System nach Anspruch 6, dadurch gekennzeichnet, daß die Kanalinformationen mindestens eine der folgenden Informationen aufweisen: Rang des laufenden Oktetts in dem über jeden Kanal empfangenen laufenden Rahmen, Zustand des Übertragungskanals.

8. System nach Anspruch 1, dadurch gekennzeichnet, daß es mit einem Analyseautomaten (76) zusammenarbeitet, der aufweist:
. erste Mittel zur Erfassung des laufenden Datenoktetts (71), das von der von den Umkodiermitteln gelieferten Bearbeitungsinformation (81) begleitet wird,
. zweite Mittel zur Durchführung der Bearbeitung dieses Datenoktetts,
wobei die ersten und zweiten Mittel zyklisch für jedes neue Datenoktett (71) aktiviert werden.

9. System nach Anspruch 1, dadurch gekennzeichnet, daß der Automat Mittel zum Auslösen jedes neuen Zyklus der Wortanalyse- und -bearbeitungseinrichtung (74) aufweist, wobei die Auslösung nach der Abwicklung jedes der Wortbearbeitungszyklen erfolgt.

10. System nach Anspruch 1, dadurch gekennzeichnet, daß die Umkodiermittel (80) aus einem Festspeicher bestehen.

11. System nach einem beliebigen der Ansprüche 1 bis 9, dadurch gekennzeichnet, daß die am Ausgang der Umkodiermittel (82) gelieferte Bearbeitungsinformation (81) eine logische Verzweigungsadresse für ein Bearbeitungsprogramm ist.
